# FASCICULE DE BREVET EUROPEEN

(11) **EP 2 986 407 B1**
(45) Date de publication et mention de la délivrance du brevet: **21.08.2019**
(21) Numéro de dépôt: 14715366.2
(22) Date de dépôt: 13.03.2014
(51) Int. Cl.: B23B 41/12, B23B 29/034, B23B 51/10

(54) **PROCEDE ET OUTIL ROTATIF D'USINAGE BI-MATIERE**
VERFAHREN UND DREHBARES WERKZEUG ZUR BIMATERIALVERARBEITUNG
METHOD AND ROTARY TOOL FOR BI-MATERIAL MACHINING

(30) Priorité: 15.04.2013 FR 1353383
(43) Date de publication de la demande: 24.02.2016
(73) Titulaire: Renault S.A.S., 92100 Boulogne-Billancourt (FR)
(72) Inventeur: CHERONNEAU, Gérard, F-91460 Marcoussis (FR)
(86) Numéro de dépôt international: PCT/FR2014/050573
(87) Numéro de publication internationale: WO 2014/170564

(56) Documents cités:
- WO-A1-2009/115222
- DE-U1- 9 207 000
- DE-U1- 29 622 294
- FR-A1- 2 874 027
- JP-A- 2002 052 414
- US-A- 3 018 675
- US-A- 6 033 161
- US-A1- 2012 155 977

## Description

La présente invention se rapporte à l'usinage des organes mécaniques, notamment de la face supérieure des blocs-cylindres de moteurs à combustion interne.

Plus précisément, elle a pour objet un procédé selon le préambule de la revendication 1 d'usinage d'une pièce mécanique bi-matière présentant des orifices cylindriques revêtus intérieurement d'un matériau de dureté supérieure à la sienne, qui affleure sur sa face extérieure, avec un outil de fraisage rotatif.

Cette invention a également pour objet un outil rotatif selon le préambule de la revendication 6 d'usinage bi-matière, spécialement conçu pour la mise en oeuvre d'un tel procédé.

FR 2 874 027 A montre un exemple d'un tel procédé et d'un tel outil.

Elle trouve une application privilégiée, mais non limitative, dans l'usinage de bloc-cylindres de moteurs en aluminium avec des chemises en fonte.

Les moteurs à combustion interne pour véhicule automobile sont équipés dans certains cas, de blocs-cylindres comprenant un corps en métal tendre, notamment à base d'aluminium, dans lequel sont ménagés des alésages, ou cylindres, munis de chemises en métal dur, notamment à base de fonte. Ces blocs-cylindres bi-matière sont coulés en aluminium, avec des préformes pour les chemises de cylindre en fonte. Au final, la face supérieure du bloc en aluminium affleure avec une face d'extrémité de chaque chemise en fonte.

Le surfaçage de la face supérieure des usinages bi-matière, peut être réalisé avec de simples fraises à surfacer. Cependant, les outils habituels ne garantissent pas le niveau de qualité souhaité pour les faces de combustion, car le risque de rayures sur celle-ci n'est pas exclu.

L'usinage de pièces métalliques bi-matière est une opération délicate, notamment lorsque les deux matières concernées présentent des duretés et des caractéristiques mécaniques différentes. Cette opération nécessite des outillages spécifiques, dont la durée de vie est généralement limitée par l'usure différentielle des pièces coupantes. Les problèmes liés à l'usinage bi-matière se posent sur toutes les pièces composées pour partie d'un matériau ferreux et pour partie d'un matériau non ferreux (par exemple fonte et aluminium ou fonte et acier). On le rencontre en particulier sur la face supérieure des blocs-cylindres de moteurs en aluminium, dont les cylindres sont revêtus intérieurement de chemises en fonte.

La présente invention vise à augmenter la durée de vie des outils de fraisage. Dans le cas particulier des blocs-cylindres de moteur à combustion, elle permet de diminuer les risques de rayures sur la face combustion, en améliorant la fiabilité des opérations de surfaçage.

Dans ce but, elle prévoit les caractéristiques du procédé de la revendication 1 ou de l'outil rotatif de la revendication 6.

L'outil présente à cet effet une série de plaquettes de lamage, aptes à réaliser un perçage à fond plat dans la matière de la pièce et celle du revêtement, et une série de plaquettes décalées axialement sur le corps d'outil par rapport aux premières. Les deuxièmes plaquettes pénètrent davantage dans la matière du revêtement que les premières, pour réaliser à l'extrémité supérieure de celui-ci, des chanfreins orientés vers l'intérieur de l'orifice.

La présente invention sera mieux comprise à la lecture de la description suivante d'un mode de réalisation non limitatif de celle-ci, en se reportant aux dessins annexés, sur lesquels :
- la figure 1 est une vue d'ensemble de l'outil proposé,
- les figures 2A, 2B, 2C montrent le décalage des plaquettes, et
- les figures 3A, 3B, et 3C illustrent le procédé.

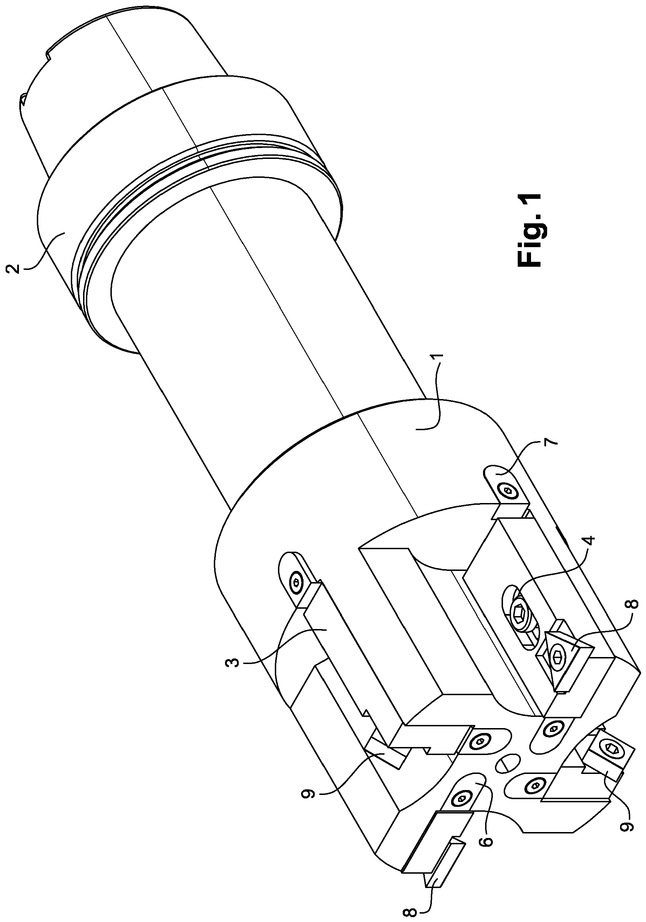

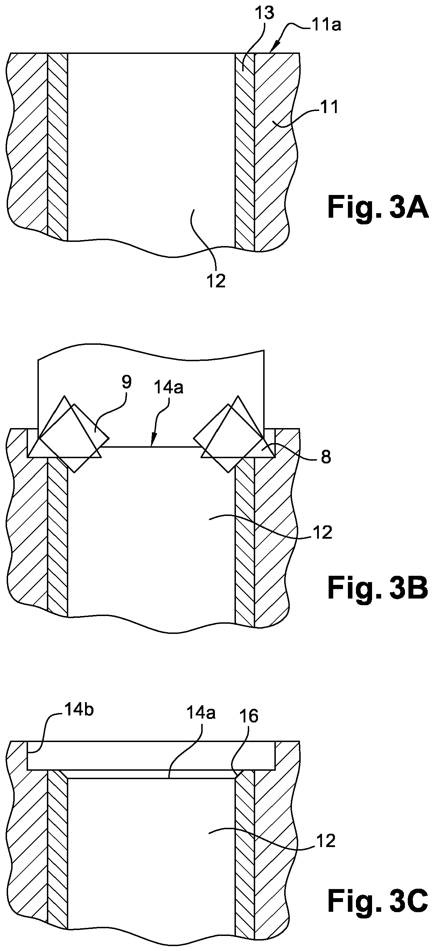

Sur la figure 1, on a représenté un outil d'usinage rotatif bi-matière conforme à l'invention, apte à usiner une face de pièce mécanique bi-matière en réalisant en plongée des perçages alignés sur l'axe d'orifices cylindriques, qui sont ouverts sur la face de la pièce, et revêtus intérieurement d'une matière de dureté supérieure à celle de la pièce. L'outil est composé d'un corps d'outil 1, muni d'un épaulement 2 de rattachement à une machine d'entraînement rotative (non représentée), et de quatre cartouches porte-plaquettes 3 avec leurs moyens de serrage 4. Les cartouches disposent de moyens de réglage en diamètre 6 et de moyens de réglage en épaisseur 7. Les plaquettes sont de deux type : des plaquettes triangulaires 8, et des plaquettes carrées 9. Les plaquettes triangulaires 8 sont des plaquettes de lamage aptes à réaliser un perçage à fond plat dans la matière du bloc-cylindres, la pièce 11, et celle de la chemise 13. La deuxième série de plaquettes 9, décalées axialement sur le corps d'outil par rapport aux premières, pénètre davantage dans la matière du revêtement pour réaliser un chanfrein à l'extrémité supérieure de celui-ci. Le chanfrein 16, orienté vers l'intérieur du cylindre, est visible sur les figures 3B et 3C.

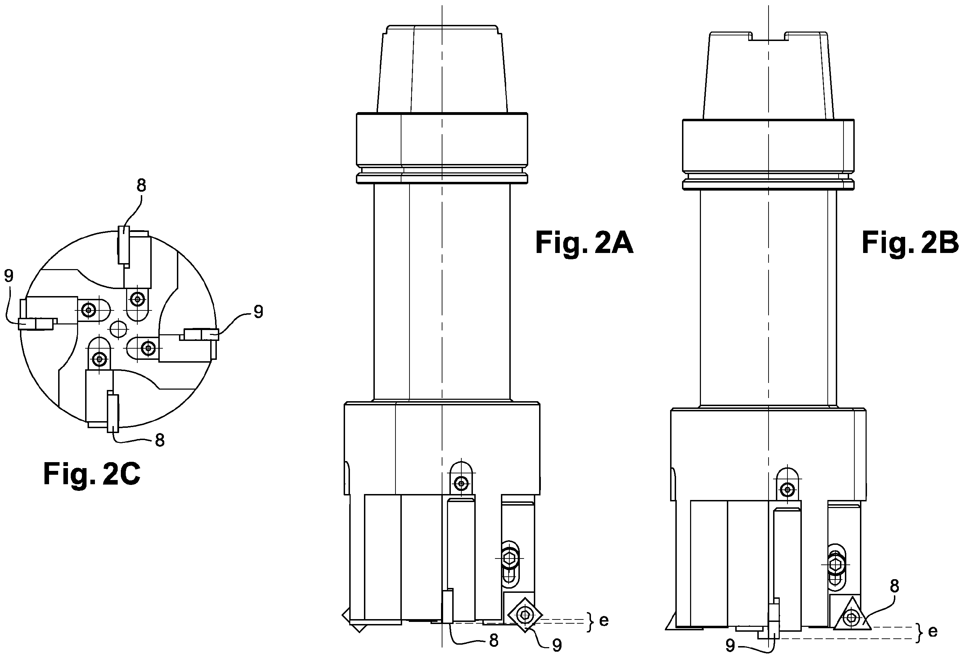

L'outil de la figure 1 porte quatre plaquettes, dont deux plaquettes de lamage 8 diamétralement opposées et deux plaquettes de chanfrein 9 diamétralement opposées, qu'on retrouve sur les figures 2A, 2B, et sur la coupe de la figure 2C. Les figures 2B et 2C mettent en évidence le décalage axial (e) des plaquettes de chanfrein 9 par rapport aux plaquettes de lamage 8. Dans l'exemple décrit, la pièce mécanique est un bloc cylindres de moteur à combustion en aluminium, dont les cylindres sont revêtus intérieurement de chemises en fonte. Les trois figures 3A, 3B, 3C sont des coupes verticales partielles d'un bloc cylindre 11, effectuées dans le plan diamétral d'un cylindre 12. Sur la figure 3A, la surface supérieure 11a du bloc est essentiellement plane (aux défauts de fabrication près). L'extrémité supérieure de la chemise 13, par exemple en fonte, affleure la face 11a. La figure 3B illustre l'opération combinée de lamage et de « chanfreinage », qui est réalisée dans la matière du bloc-cylindres 11 et celle de la chemise 13. En une seule plongée, calée axialement sur le cylindre 12, l'outil réalise le lamage bi-matière dégageant à la partie supérieure du cylindre 12, d'une part une ébauche d'alésage dans la masse de la pièce et celle du revêtement, et d'autre part le chanfrein 16, dont la hauteur nominale est déterminée par le décalage axial des plaquettes 8, 9, et correspond à celui-ci.

Lors de la « plongée », les plaquettes de lamage 8 laissent une surépaisseur d'usinage dans la tolérance demandée. Simultanément, les plaquettes de chanfrein 9, qui pénètrent davantage dans la matière, réalisent le chanfrein 16. Le résultat de l'opération est un perçage à fond plat 14a et bord droit 14b dans les matières du bloc 11 et de la chemise 13, avec le chanfrein 16 dans la seule matière de la chemise 13 (cf. figure. 3C).

En conclusion, le procédé d'usinage bi-matière proposé permet d'effectuer en un seul passage d'outil un lamage bi-matière du bloc-cylindres un usinage des chanfreins. Une opération de fraisage surfaçage peut ensuite être réalisée au cours d'un deuxième passage outil, avec une profondeur de passe de 0,20 à 0.30mm. La méthode proposée permet de diminuer la profondeur de passe dans la partie fonte. Cette diminution a pour effet d'augmenter la durée de vie de l'outil et d'assurer une meilleure qualité de surface. Elle trouve un intérêt particulier dans l'usinage de surface supérieure de bloc cylindres. Cette méthode peut s'appliquer de manière générale à l'ensemble des usinages bi-matière nécessitant un surfaçage précis. Dans le domaine automobile, il s'agit de pièces telles que bloc-cylindres (ou carter-cylindres), culasse, carter de boîte de vitesses, pompe, diverses pièces détachées, etc. Cette invention peut trouver également des applications pertinentes dans d'autres domaines, tels que l'aéronautique, pour l'usinage de pièces bi-matière, par exemple en magnésium et en aluminium ou autres. Dans la plupart des cas, l'usinage bi-matière permet en effet une bonne diffusion de la chaleur, évitant ainsi les risques de casse et de craquelures, sur des pièces soumises à des températures élevées.

## Revendications

1. Procédé d'usinage d'une pièce mécanique bi-matière (11) présentant des orifices cylindriques (12) revêtus intérieurement d'un matériau de dureté supérieure à la sienne affleurant sur sa face extérieure, avec un outil de fraisage rotatif, **caractérisé en ce que** l'outil réalise en un seul passage en plongée axiale dans l'orifice cylindrique (12), d'une part un lamage bi-matière dégageant à la partie supérieure de l'orifice (12) une ébauche d'alésage dans la masse de la pièce et celle du revêtement, et d'autre part un chanfrein (16) sur l'extrémité supérieure du revêtement (13), qui est orienté vers le centre de l'orifice cylindrique (12).

2. Procédé d'usinage bi-matière selon la revendication 1, **caractérisé en ce que** les opérations de lamage et de chanfreinage sont réalisées respectivement par des plaquettes lamage (8) et des plaquettes de chanfrein (9) décalées axialement par rapport aux premières, de manière à pénétrer davantage dans l'épaisseur de la matière que celles-ci.

3. Procédé d'usinage bi-matière selon la revendication 2, **caractérisé en ce que** le résultat du passage de l'outil est un perçage à fond plat (14a) et à bord droit (14b) dans les matières de la pièce (11) et du revêtement (13) avec un chanfrein de transition (16) orienté obliquement vers le centre de l'orifice cylindrique (12), dans la matière du revêtement (13).

4. Procédé d'usinage selon la revendication 1, 2 ou 3, **caractérisé en ce que** la hauteur nominale du chanfrein (16) correspond au décalage axial des plaquettes (8, 9) sur l'outil.

5. Procédé d'usinage selon l'une des revendications précédentes, **caractérisé en ce que** la pièce mécanique (11) est un bloc-cylindres de moteur à combustion en aluminium, dont les cylindres (12) sont revêtus intérieurement de chemises en fonte (13).

6. Outil rotatif d'usinage d'une face de pièce mécanique bi-matière (11), apte à réaliser en plongée des perçages alignés sur l'axe d'orifices cylindriques (12) qui sont ouverts sur une face (11a) de la pièce et revêtus intérieurement d'une matière (13) de dureté supérieure à celle de la pièce, **caractérisé en ce qu'**il présente deux plaquettes de lamage (8) triangulaires diamétralement opposées, aptes à réaliser un perçage à fond plat dans la matière de la pièce et celle du revêtement, et deux plaquettes de chanfrein (9) de forme carrée, diamétralement opposées, décalées axialement sur le corps d'outil par rapport aux plaquettes de lamage, de manière à pénétrer davantage dans la matière du revêtement (13) pour réaliser à l'extrémité supérieure de celui-ci, des chanfreins (16) orientés vers l'intérieur de l'orifice (12).

7. Outil rotatif d'usinage selon la revendication 6, **caractérisé en ce que** la hauteur nominale du chanfrein (16) est déterminée par le décalage axial (e) des plaquettes (8, 9) .

8. Outil rotatif d'usinage selon la revendications 6 ou 7, **caractérisé en ce que** ses plaquettes (8, 9) sont décalées axialement de manière d'une part à réaliser en un seul passage, l'usinage de surface d'un bloc-cylindres (11) de moteur à combustion en aluminium dont les cylindres sont revêtus intérieurement de chemises en fonte (13) et d'autre part à former un chanfrein (16) orienté obliquement vers l'intérieur du cylindre à l'extrémité supérieure des chemises (13).

## Patentansprüche

1. Verfahren zur Bearbeitung eines aus zwei Materialien bestehenden mechanischen Teils (11), welches zylindrische Öffnungen (12) aufweist, die innen mit einem Material mit einer Härte, die größer als seine eigene ist, beschichtet sind, das mit der Außenseite des Teils bündig ist, mit einem rotierenden Fräswerkzeug, **dadurch gekennzeichnet, dass** das Werkzeug in einem einzigen Vorgang des axialen Eintauchens in die zylindrische Öffnung (12) einerseits eine Senkung in zwei Materialien, die am oberen Teil der Öffnung (12) einen Bohrungsrohling in der Masse des Teils und derjenigen der Beschichtung freilegt, und andererseits eine Fase (16) am oberen Ende der Beschichtung (13), welche zur Mitte der zylindrischen Öffnung (12) hin gerichtet ist, herstellt.

2. Verfahren zur Bearbeitung von zwei Materialien nach Anspruch 1, **dadurch gekennzeichnet, dass** die Arbeitsgänge des Senkens und des Abfasens durch Senkschneidplatten (8) und Fasschneidplatten (9), die in Bezug auf die Ersteren axial versetzt sind, so dass sie tiefer als diese in die Dicke des Materials eindringen, ausgeführt werden.

3. Verfahren zur Bearbeitung von zwei Materialien nach Anspruch 2, **dadurch gekennzeichnet, dass** das Ergebnis des Durchgangs des Werkzeugs eine Bohrung mit flachem Boden (14a) und mit geradem Rand (14b) in den Materialien des Teils (11) und der Beschichtung (13) ist, mit einer Übergangs-Fase (16), die schräg zur Mitte der zylindrischen Öffnung (12) hin gerichtet ist, im Material der Beschichtung (13) .

4. Verfahren zur Bearbeitung nach Anspruch 1, 2 oder 3, **dadurch gekennzeichnet, dass** die Nennhöhe der Fase (16) dem axialen Versatz der Schneidplatten (8, 9) am Werkzeug entspricht.

5. Verfahren zur Bearbeitung nach einem der vorhergehenden Ansprüche, **dadurch gekennzeichnet, dass** das mechanische Teil (11) ein Zylinderblock eines Verbrennungsmotors aus Aluminium ist, dessen Zylinder (12) innen mit Laufbuchsen aus Gusseisen (13) ausgekleidet sind.

6. Rotierendes Werkzeug zur Bearbeitung einer Fläche eines aus zwei Materialien bestehenden mechanischen Teils (11), welches dafür ausgelegt ist, im Eintauchverfahren Bohrungen herzustellen, die auf der Achse zylindrischer Öffnungen (12) ausgerichtet sind, welche auf einer Seite (11a) des Teils offen sind und innen mit einem Material (13) mit einer Härte, die größer als diejenige des Teils ist, beschichtet sind, **dadurch gekennzeichnet, dass** es zwei einander diametral gegenüberliegende dreieckige Senkschneidplatten (8) aufweist, die dafür ausgelegt sind, in dem Material des Teils und demjenigen der Beschichtung eine Bohrung mit flachem Boden herzustellen, und zwei einander diametral gegenüberliegende Fasschneidplatten (9) von quadratischer Form, die auf dem Körper des Werkzeugs in Bezug auf die Senkschneidplatten axial versetzt sind, so dass sie tiefer in das Material der Beschichtung (13) eindringen, um am oberen Ende derselben Fasen (16) herzustellen, die zum Inneren der Öffnung (12) hin gerichtet sind.

7. Rotierendes Werkzeug zur Bearbeitung nach Anspruch 6, **dadurch gekennzeichnet, dass** die Nennhöhe der Fase (16) durch den axialen Versatz (e) der Platten (8, 9) bestimmt wird.

8. Rotierendes Werkzeug zur Bearbeitung nach Anspruch 6 oder 7, **dadurch gekennzeichnet, dass** seine Schneidplatten (8, 9) axial versetzt sind, derart, dass in einem einzigen Vorgang einerseits die Oberflächenbearbeitung eines Zylinderblockes (11) eines Verbrennungsmotors aus Aluminium durchgeführt wird, dessen Zylinder innen mit Laufbuchsen aus Gusseisen (13) ausgekleidet sind, und andererseits eine Fase (16), die schräg zum Inneren des Zylinders hin gerichtet ist, am oberen Ende der Laufbuchsen (13) ausgebildet wird.

## Claims

1. Method of machining a bi-material mechanical workpiece (11) including cylindrical orifices (12) lined internally with a material of greater hardness than its own flush with its exterior face using a rotary milling tool, **characterized in that** the tool produces in a single pass plunging axially into the cylindrical orifice (12) on the one hand a bi-material counterbore uncovering at the top of the orifice (12) a roughed bore in the mass of the workpiece and that of the lining and on the other hand a chamfer (16) at the upper end of the lining (13) that is oriented toward the center of the cylindrical orifice (12).

2. Bi-material machining method according to Claim 1, **characterized in that** the counterboring and chamfering operations are respectively effected by counterboring tips (8) and chamfering tips (9) offset axially relative to the former so as to penetrate farther into the thickness of the material than them.

3. Bi-material machining method according to Claim 2, **characterized in that** the result of the tool pass is a bore with a flat bottom (14a) and a straight edge (14b) in the materials of the workpiece (11) and the lining (13) with a transition chamfer (16) in the material of the lining (13) oriented obliquely toward the center of the cylindrical orifice (12).

4. Machining method according to Claim 1, 2 or 3, **characterized in that** the nominal height of the chamfer (16) corresponds to the axial offset of the tips (8, 9) on the tool.

5. Machining method according to any one of the preceding claims, **characterized in that** the mechanical workpiece (11) is an aluminum internal combustion engine cylinder block the cylinders (12) of which are lined internally with cast iron liners (13).

6. Rotary tool for machining a face of a bi-material mechanical workpiece (11), adapted to produce by plunging bores aligned on the axis of cylindrical orifices (12) that open onto a face (11a) of the workpiece and are lined internally with a material (13) of greater hardness than that of the workpiece, **characterized in that** it includes two diametrically opposite triangular counterboring tips (8) adapted to produce a bore with a flat bottom in the material of the workpiece and that of the lining and two diametrically opposite chamfering tips (9) of square shape offset axially on the tool body relative to the counterboring tips so as to penetrate farther into the material of the lining (13) to produce at the upper end thereof chamfers (16) oriented toward the interior of the orifice (12).

7. Rotary machining tool according to Claim 6, **characterized in that** the nominal height of the chamfer (16) is determined by the axial offset (e) of the tips (8, 9).

8. Rotary machining tool according to Claim 6 or 7, **characterized in that** its tips (8, 9) are offset axially so as on the one hand to produce in a single pass the surface machining of an aluminum internal combustion engine cylinder block (11) the cylinders of which are lined internally with cast iron liners (13) and on the other hand to form a chamfer (16) oriented obliquely toward the interior of the cylinder at the upper end of the liners (13).
